# EUROPEAN PATENT APPLICATION

(11) **EP 1 594 302 A1**
(43) Date of publication of application: **09.11.2005**
(21) Application number: 04101961.3
(22) Date of filing: 06.05.2004
(51) Int. Cl.: H04N 1/407

(54) **Digital control strip for flexogaphic printing**

(71) Applicant: AGFA-GEVAERT, 2640 Mortsel (BE)
(72) Inventor: Vanlathem, Bert AGFA-GEVAERT, 2640 Mortsel (BE)

(57) **Abstract**

A digital control strip applicable to an imageable medium such as a printing plate, the digital control strip including (A) a plurality of control fields each having a dot size different from that of any other of the control fields, wherein each of the control fields includes a plurality of subfields each having a coverage different from that of any other of the subfields of the control field; or

(B) a plurality of control fields each having a coverage different from that of any other of the control fields, wherein each of the control fields includes a plurality of subfields each having a dot size different from that of any other of the subfields of the control field; or
(C) a control field including a first, a second and a third subfield, wherein a coverage of the second subfield is different from a coverage of the first subfield and wherein a dot size of the third subfield is different from a dot size of the first subfield.

## Description

### FIELD OF THE INVENTION

The present invention relates to devices and methods for exposure and control of imageable media such as photographic film and printing plates. More specifically the invention relates to a digital control strip suitable for quality control of imaging devices and imaged media.

### BACKGROUND OF THE INVENTION

Flexographic printing plates are generally used to form relief printing surfaces that find general use in printing on surfaces which are soft and easily deformable, such as packaging materials, e.g. cardboard, plastic film, etc. We refer to patent application **US 2003/0129533 A1,** included herein by reference, for more information on flexographic printing plates, including imaging and processing of these plates.

Reproducing the smallest dots on a flexographic plate is of the utmost importance to obtain high quality printing. Therefore, plate making has to be performed with very high precision and control. The variations in softness and the thickness of the different plates make it difficult to keep the flexo process well under control.

Patent application **EP-A-0 740 457**, included herein by reference, discloses a screening method that is suitable for flexographic printing. We refer to this patent application for more information on screening technology, including the discussion of terms such as screen frequency (in lpi), dot size (in µm), coverage (in %) and other relevant terms. Agfa's Sublima™ screening can be used for flexographic applications.

Patent application **EP-A-0 825 022**, included herein by reference, discloses a digital control strip suitable for quality control of imaging devices.

To monitor and control the flexographic plate making process, only very few tools are available. After plate making, the printing plate can be controlled visually, but this is quite hard. After the image was printed, detecting on the printed image which dots are stable and which dots are not, is extremely difficult.

There is still a need for an improved method for monitoring and controlling the flexographic plate making process.

### SUMMARY OF THE INVENTION

The present invention is a digital control strip as claimed in independent claim 1. Preferred embodiments of the invention are set out in the dependent claims. The invention also includes a method for assessing imaging quality of an imaging system as claimed in claim 6. The invention further includes an imaged medium as claimed in claim 8, such as a flexographic printing plate or film that is sensitive to electromagnetic radiation, e.g. a photosensitive film.

### DETAILED DESCRIPTION OF THE INVENTION

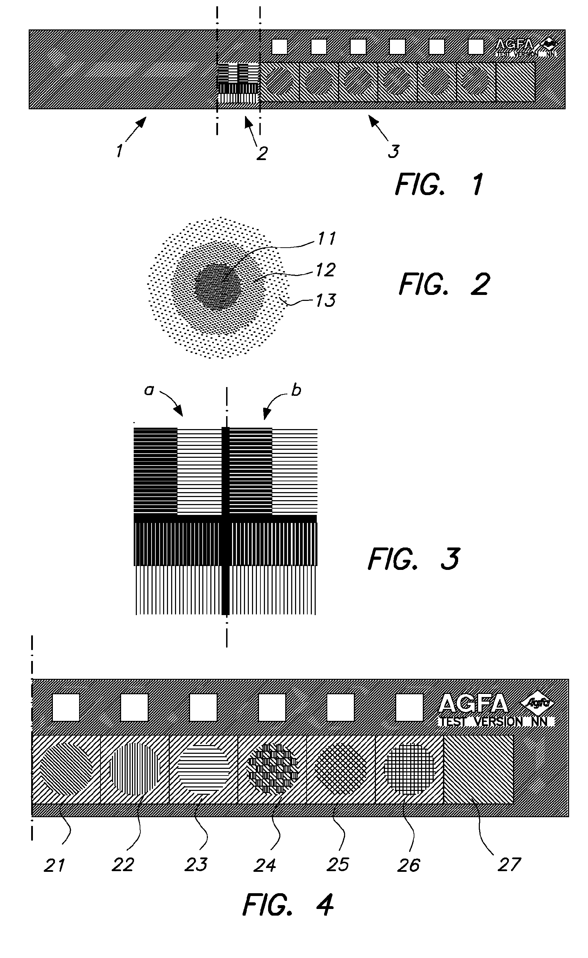

A preferred embodiment of the invention is a digital control strip illustrated by Fig. 1. This strip includes three areas, 1, 2 and 3. Each of these areas includes a different set of control fields, that are discussed in detail further below.

A purpose of this control strip is to determine and to check the minimum dot size that can still be reproduced consistently and that remains stable on the printing plate.

Keeping the plate making process under control also means keeping the reproduction of the smallest dots on the plate under control, so that the highlights and shadows are well reproduced, as required for good quality printing.

The reproduction of the plates is influenced by a lot of different factors. Customarily, as discussed in patent application **US 2003/0129533 A1** (mentioned already above) in connection with Fig. 1 of that patent application, the processing of flexographic printing plates includes front exposure and back exposure. The front exposure must be long enough for the small dots to receive enough UV light in order to be fully cured and to have full connection to the "floor" of the plate. The back exposure has to be long enough to make sure that the relief depth is not too large, otherwise the smallest dots will be disappear during wash-out or during printing. Too long back exposure times make the relief depth too small, resulting in ink filling of the plate during printing.

Sublima™ flexo makes the plate making process easier and less critical to changes, by relying on the minimum dot definition. But, changing conditions or human errors may result in a change of the minimum dot. An advantage of applying the invention in connection with Sublima XM-screening technology is that it results in good reproduction of the initially defined minimum dot, so that the flexo Sublima screening behavior is maintained, resulting in good highlights, open shadow and clean midtones. On a strip in accordance with the invention, it is very easy to check visually if the minimum dot reproduction is stable and how much latitude is still available.

The strip is preferably as small as possible, making it possible to put the strip always on the plate and reducing the plate waste as much as possible. The location of the strip on the plate is preferably chosen so that it does not interfere with the image on the plate, e.g. in the margin, or, generally, at an image-wise irrelevant portion of the plate. The strip can be used on all sorts of flexo plates, regardless of the plate type and thickness.

Now, the three areas of the embodiment of the strip shown in Fig. 1 will be discussed.

The purpose of the first and second areas, areas 1 and 2, is to monitor the flexo plate making itself, while the third area, area 3, serves to monitor film production. Fig. 1 represents a negative file of the digital representation of an embodiment of a digital control strip. For that reason, in the first area, that serves to control the minimum dot, the small white dots in the black background area cannot be seen on the reproduction of the strip in Fig. 1. Fig. 2 schematically shows one control field out of the plurality of control fields in the first area. The shown control field has a dot size of 3x3 microdots (i.e. 3x3 pixels), which may e.g. be a dot of 30 µm × 30 µm (a microdot is the smallest unit that can be addressed by the imaging apparatus, such as an imagesetter or platesetter; microdots are also discussed in **EP-A-0 740 457** mentioned already above). The shown control field includes three subfields 11, 12 and 13. Each of these subfields has a different coverage, and thus a different number of dots per unit area. In the embodiment of Fig. 2, the three subfields 11, 12, 13 are surrounding each other and are concentric; the subfields have a coverage of respectively 1% (subfield 11), 0.6% (subfield 12) and 0.2% (subfield 13). It is thus easy to check visually, on the strip reproduced on plate, up to what coverage a 3x3 dot holds on plate (e.g. the dots may be well reproduced for 1% and 0.6% but not for 0.2%).

Preferably, the first area includes a plurality of control fields as shown in Fig. 2 (i.e. with subfields for e.g. 0.2%, 0.6% and 1%) but for different dot sizes, e.g. a control field for a dot size of 3x3 microdots, another control field for a dot size of 4x4 microdots and still another one for a dot size of 5x5 microdots. Thus, a simple visual inspection allows to control what dot size holds on plate and for which coverage (in %).

A control field may include more or less than three subfields (e.g. four subfields with coverages of respectively 0.6%, 1%, 2% and 5%). One or more subfields may have a non-circular form (e.g. the outer subfield 13, of 0.2% in Fig. 2, may be square, having dimensions of e.g. 1 cm x 1 cm; thus the control fields for the different dot sizes may be located adjoining to each other, so that one side of the surrounding square is common to adjoining control fields).

In another, less preferred embodiment of the invention, the first area of the strip includes a plurality of control fields that each have a different coverage, and each of the control fields has a number of subfields having different dot sizes (e.g. a control field for 1% has subfields for 3x3, 4x4 and 5x5 dots, another control field for 0.6% also has subfields for 3x3, 4x4 and 5x5 dots, etc.).

In yet another embodiment of the invention, a control field includes a combination of subfields that have different coverages and different dot sizes; e.g. a control field includes a first subfield of 3x3 and 0.6%, a second subfield of 3x3 and 1% and a third subfield of 2x2 and 1%; alternatively, a control field includes a first subfield of 3x3 and 0.6% and a second subfield of 2x2 and 1%.

A change in film processing may have an effect on minimum dot; by overexposing the film, small dots are lost.

A change in plate making (front/back exposure) may have an effect on minimum dot. By making higher relief depths, small dots are lost or become unstable.

As is the first area 1 in Fig. 1, the second area, area 2, is also used to monitor the plate making itself. In the second area, a plurality of second control fields are located; each of these second control fields includes a line pattern. By means of these second control fields, the reproduction quality of the image in the shadows and in the highlights can be checked.

Fig. 3 shows an embodiment of such a plurality of second control fields. Area a (which is a sub-area of area 2 of Fig. 1) contains four different line patterns. Two of these line patterns have the same orientation (in Fig. 3, they have a horizontal orientation), while the two other line patterns have an orientation (vertical in Fig. 3) that is substantially orthogonal to the orientation of the first two line patterns. Of the two line patterns with the same orientation, one is a set of positive lines, of e.g. two pixels wide, and the other a set of negative lines of the same width. The distance between these lines is quite large, e.g. fifteen pixels. Thus, these lines form narrow "mountains" resp. "valleys" on the plate. In Fig. 3, sub-area b includes the same line patterns as a, but with another pixel width of the lines, e.g. three pixels for area b against two pixels for area a.

These line patterns can be used to check the image quality in the shadows: suppose that dots of 2x2 pixels are well reproduced (as checked by the control fields in area 1), but that the quality of the line pattern with lines of two pixels wide is not OK, then this will result in bad image quality of the printed image in the shadows. It may then be better to select 3x3 minimum dots instead of 2x2. Thus, checking on plate the line patterns in area 2 of the strip helps to find a good balance between stability in the highlights (cf. the control fields in area 1 of the strip) and image quality in the shadows.

Analogously to the image quality in the shadows, the image quality in the highlights can be checked by controlling if the line patterns in the highlights are well reproduced.

In one embodiment of the invention, only negative line patterns - resulting in "valleys" on the plate - are present; in another embodiment of the invention, only positive line patterns - resulting in "mountains" on the plate - are present.

Returning to Fig. 1, the third area 3 is used to check film processing. Fig. 4 illustrates an embodiment of the control fields used for this purpose.

The embodiment of Fig. 4 contains seven different control fields, 21-27. Control field 27 is a field with 50% coverage. Control fields 21 to 26 each have a pattern subfield (a circle in Fig. 4) with a pattern different from that of the other ones, and a background subfield (the area in the square outside the circle, in Fig. 4) with the same pattern as that of the other ones. The reproduction of the digital control strip on film is assessed visually, and the control field is selected where the pattern subfield and the background subfield visually have the same density. That control field, e.g. control field 23, is then taken as the reference. During film processing, the reference field is reassessed; if it is different from the initial reference field, this means that there is an unwanted change in film processing (e.g. due to exhaustion of the chemicals used during processing); the pattern subfields and the background subfield are defined in such a way that an unwanted change in film processing results in a change of the reference control field.

In one embodiment of the invention, the pattern subfields, or at least some of them, are checkerboard patterns, which are very sensitive to changes or fluctuations in film processing, while the background subfield is much less sensitive, such as a pattern of orthogonal lines. For control field 21, 2x2 dots may be used, for control field 22, 3x3 dots, for control field 23, 4x4 dots, etc.

In a particular embodiment of the invention, control field 27 is absent.

The three areas of the embodiment of the strip shown in Fig. 1, i.e. areas 1, 2 and 3, serve different purposes - all with respect to monitoring and controlling the flexo plate making process (which may include one or more processing steps via film) - and these areas may therefore be used independently of each other. A digital control strip in accordance with the invention may include only a plurality of first control fields, as discussed in connection with area 1 of Fig. 1, or only a plurality of second control fields, as illustrated by area 2 of Fig. 1, or only a plurality of third control fields, as illustrated by area 3 of Fig. 1. Alternatively, a digital control strip in accordance with the invention may also include any combination of first, second and third control fields (e.g. only first and second control fields; first, second and third control fields).

The parameters used above to describe particular embodiments of the invention may of course be changed; e.g. instead of having control fields for 3x3, 4x4 and 5x5 dots, control fields may be defined for 2x2, 3x3 and 4x4 dots. The choice of the exact parameters defining the digital control strip preferably depends on the properties of the flexo plate and platemaking process (e.g. another set of parameters may be chosen for digital plates than for analog plates).

The dots need not be symmetric; instead of e.g. 2x2 or 3x3 dots, 2x3 dots or 4x3 dots may be used.

The invention can advantageously be used for computer-to-plate packaging applications. The invention can be applied for all types of flexographic processes: film + analog plates; digital plates; direct engraving (of course, if no film is used in the flexographic process, the third area of the digital control strip may be absent).

The invention may be used to assess the imaging quality of the flexographic plate making process. It may also be used to find the cause of a problem in the process. If, e.g. a minimum dot size of 30 µm, that worked perfectly in the past, is no longer OK according to the digital control strip, it is of course possible to change to a minimum dot size of 40 µm, but a better alternative is to analyze the plate making process, using the digital control strip, in order to find the cause of the problem.

Those skilled in the art will appreciate that numerous modifications and variations may be made to the embodiments disclosed above without departing from the scope of the present invention.

## Claims

1. A digital control strip applicable to an imageable medium such as a printing plate, the digital control strip comprising:
(A) a plurality of control fields each having a dot size different from that of another control field, wherein each of said control fields includes a plurality of subfields each having a coverage different from that of another subfield of said control field; or
(B) a plurality of control fields each having a coverage different from that of another control field, wherein each of said control fields includes a plurality of subfields each having a dot size different from that of another subfield of said control field; or
(C) a control field including a first, a second and a third subfield, wherein a coverage of said second subfield is different from a coverage of said first subfield and wherein a dot size of said third subfield is different from a dot size of said first subfield.

2. The digital control strip according to claim 1 wherein said plurality of subfields comprises a first, a second and a third subfield and wherein said first subfield is surrounded by said second subfield and said second subfield is surrounded by said third subfield.

3. The digital control strip according to claim 1 or claim 2 further comprising a plurality of second control fields wherein each of said second control fields includes a positive line pattern and a negative line pattern.

4. The digital control strip according to claim 3 wherein said positive line pattern includes lines having a specific width and said negative line pattern includes lines having a width equal to said specific width.

5. The digital control strip according to any one of the preceding claims further comprising a plurality of third control fields for selecting a reference control field out of said plurality of third control fields, wherein said reference control field is indicative of stability of a film processing step for obtaining said imageable medium, and wherein each of said third control fields includes a background subfield and a pattern subfield, different from said pattern subfield of another third control field.

6. A method for assessing imaging quality of an imaging system using the digital control strip according to any one of claims 1 to 5.

7. A method for obtaining an imaged medium including a control strip, comprising the steps of generating a digital control strip according to any one of claims 1 to 5 and applying said digital control strip to said imaged medium at an image-wise irrelevant portion.

8. An imaged medium obtained by the method according to claim 7.

9. The imaged medium according to claim 8 wherein said imaged medium is a flexographic printing plate.

10. The imaged medium according to claim 8 wherein said imaged medium is a film that is sensitive to electromagnetic radiation.
